Europäisches Patentamt

European Patent Office

Office européen des brevets

(19)

(11) **EP 0 761 753 B1**

(12) **EUROPEAN PATENT SPECIFICATION**

(45) Date of publication and mention
of the grant of the patent:
**18.10.2000 Bulletin 2000/42**

(51) Int Cl.[7]: **C08L 23/16**, C08K 3/00,
C08K 5/00

(21) Application number: **96305136.2**

(22) Date of filing: **12.07.1996**

(54) **Radiator hose**

Kühlerschlauch

Tuyau pour radiateur

(84) Designated Contracting States:
**DE ES FR GB IT NL**

(30) Priority: **12.07.1995 JP 17617595**

(43) Date of publication of application:
**12.03.1997 Bulletin 1997/11**

(73) Proprietor: **SUMITOMO CHEMICAL COMPANY,
LIMITED
Chuo-ku, Osaka 305 (JP)**

(72) Inventors:
• **Yamamoto, Keisaku
Ichihara-shi, Chiba (JP)**

• **Ikeda, Kiyoshi
Ichihara-shi, Chiba (JP)**
• **Koshiba, Junichi
Ichihara-shi, Chiba (JP)**

(74) Representative: **Cresswell, Thomas Anthony
J.A. KEMP & CO.
14 South Square
Gray's Inn
London WC1R 5LX (GB)**

(56) References cited:
**EP-A- 0 392 262       US-A- 4 102 855
US-A- 4 153 589       US-A- 5 100 733**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

The present invention relates to a radiator hose. More specifically, the present invention relates to a radiator hose which contains, in its outermost layer, a vulcanized rubber whose rubber component is an ethylene/$\alpha$-olefin/nonconjugated diene copolymer rubber and has overcome a problem that corrosion occurs in a metal clamp in contact with the radiator hose..

US-A-4,102,855 discloses rubber compositions comprising 100 parts by weight of an ethylene/propylene/diene rubbery polymer, from about 5 to 30 parts by weight of an ethylene/vinyl acetate copolymer and from about 2 to 10 parts by weight of solid poly-alpha-methylstyrene. EP-A-0 392 262 discloses a silicone rubber composition comprising 100 parts by weight of an organopolysiloxane, 5 to 200 parts by weight of a surfactant-treated inorganic filler, 5 to 50 parts by weight of carbon black and a curing agent. US-A-5,100,733 discloses rubber compositions containing carbon black and having a surface resistivity of $10^6\Omega$ or higher.

Ethylene/$\alpha$-olefin/nonconjugated diene copolymer rubbers such as ethylene/propylene/nonconjugated diene copolymer rubber are widely used in radiator hoses of cars and the like due to their excellent thermal resistance. While a radiator hose is usually supported by a metal clamp, there has been a problem that corrosion occurs in the metal clamp in contact with the radiator hose when in use.

As a result of a number of diligent studies concerning radiator hoses which do not yield the above-mentioned problem, the inventors have found that a radiator hose containing, in its outermost layer, a vulcanized rubber whose volume resistivity under 30% compression is not lower than $10^5\Omega.cm$ does not generate corrosion in the metal clamp in contact with the radiator hose, thereby accomplishing the present invention.

Namely, the present invention provides a radiator hose which comprises, in an outermost layer thereof, a vulcanized rubber comprising an ethylene/$\alpha$-olefin/ nonconjugated diene copolymer rubber and having a volume resistivity under 30% compression of not lower than $10^5\Omega.cm$, wherein the vulcanized rubber is obtainable by vulcanization of a rubber composition comprising the following components (A) to (C):

(A) an ethylene/$\alpha$-olefin/nonconjugated diene copolymer rubber;
(B) an additive other than the following component (C); and
(C) an inorganic filler selected from clay, talc, silica, calcium carbonate, calcium silicate, magnesium carbonate, magnesium hydroxide, magnesium oxide, aluminum hydroxide, aluminum oxide, wollastonite and zeolite;

wherein the total content of (A) to (C) is 300 to 400 parts by weight per 100 parts by weight of (A), and the proportion of (C) in the total amount of (A) to (C) is 5 to 20% by weight.

Furthermore, the present invention provides the radiator hose, wherein (B) comprises carbon black, a softener, zinc oxide, stearic acid, a vulcanization accelerator, and sulfur.

The present invention provides the radiator hose, wherein 50 to 170 parts by weight of carbon black are added to 100 parts by weight of (A).

Furthermore, the present invention provides the radiator hose, wherein 100 to 170 parts by weight of carbon black are added to 100 parts by weight of (A).

Furthermore, the present invention provides the radiator hose, wherein 100 to 150 parts by weight of carbon black are added to 100 parts by weight of (A).

The present invention provides the radiator hose, wherein (C) is clay.

Furthermore the present invention provides the radiator hose, wherein the vulcanized rubber has a hardness of 66 to 74.

The present invention will be more fully understood from the detailed description given hereinbelow and the accompanying drawings.

Further scope of applicability of the present invention will become apparent from the detailed description given hereinafter.

Fig. 1 shows a measuring system of a volume resistivity under compression of a vulcanized rubber of the present invention.

Fig. 2 shows a Table of experimental data of Example 1-7 and Comparative Example 1.

Fig. 3 shows a graph of measured volume resistivity of Example 1 and 2, and Comparative example 1 under various compression condition.

Fig. 4 shows an example of a radiator hose according to the present invention.

Fig. 5 shows another example of a radiator hose according to the present invention.

Fig. 6 shows another example of a radiator hose according to the present invention.

Fig. 7 shows another example of a radiator hose according to the present invention.

Fig. 8 shows a radiator hose according to the present invention into which a metal tube is inserted, and which is tightened by a metal clamp.

## DETAILED DESCRIPTION OF THE PREFERRED EMBODIMENTS

The rubber composition of the present invention contains (A) to (C) as components. (A) is ethylene/$\alpha$-olefin/nonconjugated diene copolymer rubber, (C) is inorganic filler, and (B) is additives except (C). Examples of $\alpha$-olefin in (A), ethylene/$\alpha$-olefin/nonconjugated diene copolymer rubber include propylene, 1-butene, 1-pentene, 1-hexene, 4-methyl-1-pentene, 1-octene, and 1-decene. Among them, propylene is preferable. Examples of nonconjugated diene include chain nonconjugated dienes such as 1,4-hexadiene, 1,6-octadiene, 2-methyl-1,5-hexadiene, 6-methyl-1,5-heptadiene, and 7-methyl-1,6-octadiene; cyclic nonconjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, and 6-chloromethyl-5-isopropenyl-2-norbornene; and trienes such as 2,3-diisopropylidene-5-norbornene, 2-ethylidene-3-isopropylidene-5-norbornene, 2-propenyl-2,2-norbornadiene, 1,3,7-octatriene, and 1,4,9-decatriene. Among them, 1,4-hexadiene, dicyclopentadiene, and 5-ethylidene-2-norbornene are preferable.

The ratio (molar ratio) of ethylene/α-olefin/nonconjugated diene in the ethylene/α-olefin/nonconjugated diene copolymer is preferably 1/(0.1 to 1)/(0.005 to 0.2).

Here, (B) is specifically exemplified by a component comprising carbon black, a softener, zinc oxide, stearic acid, a vulcanization accelerator, and sulfur. Particularly in the present invention carbon black is preferable. Examples of carbon black include HAF carbon black, FEF carbon black, and SRF carbon black. In order to keep the volume resistivity high, SRF carbon black having a large particle size is preferable. Preferably, 50 to 170 parts by weight or, more preferably, 100 to 170 parts by weight or, most preferably 100 to 150 parts by weight of carbon black are used with respect to 100 parts by weight of (A). When the amount of use thereof is too small, the strength of the vulcanized rubber may lower; whereas, when the amount of use thereof is too large, the volume resistivity may lower.

The softener is exemplified by process oil. Preferably, 30 to 150 parts by weight of the softener are used with respect to 100 parts by weight of (A). When the amount of use thereof is too small, processability may lower; whereas, when the amount of use thereof is too large, the hardness of the vulcanized rubber may lower.

Preferably, 1 to 10 parts by weight of zinc oxide are used with respect to 100 parts by weight of (A). When the amount of use thereof is too small, the strength of the vulcanized rubber may lower; whereas, when the amount of use thereof is too large, the surface texture of the vulcanized rubber may become rough.

Preferably, 0.5 to 5 parts by weight of stearic acid are used with respect to 100 parts by weight of (A). When the amount of use thereof is too small, the processability may lower; whereas, when the amount of use thereof is too large, bloom may occur in the surface of the vulcanized rubber.

Examples of the vulcanization accelerator include MBT, MBTS, CBS, TMTD, DPTT, ZnBDC, and TeEDC. Usually, a mixture of two kinds or more thereof are used. Preferably, 2 to 8 parts by weight of the vulcanization accelerator are used with respect to 100 parts by weight of (A). When the amount of use thereof is too small, the vulcanization may not proceed; whereas, when the amount of use thereof is too large, bloom may occur in the surface of the vulcanized rubber.

Preferably, 0.1 to 3.0 parts by weight of sulfur are used with respect to 100 parts by weight of (A). When the amount of use thereof is too small, the vulcanization may not proceed; whereas, when the amount of use thereof is too large, bloom may occur in the surface of the vulcanized rubber.

The inorganic filler (C) is selected from clay, talc, silica, calcium carbonate, calcium silicate, magnesium carbonate, magnesium hydroxide, magnesium oxide, aluminum hydroxide, aluminum oxide, wollastonite and zeolite. Among them, clay is preferable in particular.

300 to 400 parts by weight or, preferably, 340 to 400 parts by weight of (A) to (C) in total are used with respect 100 parts by weight of (A), while the ratio of (C) in the total amount of (A) to (C) is 5 to 20% by weight and preferably 5 to 14% by weight. When the total amount of (A) to (C) is too small, extrusion processability may become poor; whereas, when the total amount thereof is too large, the strength of the vulcanized rubber may lower. When the amount of use of (C) is too small, the volume resistivity under compression may lower; whereas, when the amount of use thereof is too large, extrusion processability may become poor while the strength of the vulcanized rubber may lower.

The vulcanized rubber preferably has a hardness of 66 to 74 as measured by a type A spring type Hardness Test in JIS-K6301. When this hardness is too low, the vulcanized rubber is likely to be deformed, whereby the hose may tend to collapse or to be damaged; whereas, when this hardness is too high, the flexibility may be lost such that the hose may be broken.

An example of the method for obtaining the vulcanized rubber of the present invention is as follows: Initially, an ethylene/α-olefin/nonconjugated diene copolymer rubber (A), an additive (B), and an inorganic filler (C), as well as ingredients appropriately usable such as antioxidant and processing aid are mixed by means of a typical kneader such as roll or banbury so as to yield a vulcanizable rubber composition. Thereafter, this rubber composition is shaped into a predetermined form and then vulcanized. Vulcanization is effected for about 1 to 30 minutes at a temperature normally not lower than 120°C or preferably within the range of 150 to 220°C. Any of press vulcanization, steam vulcanization, and hot-air vulcanization can be appropriately used therefor.

The most characteristic feature of the present invention is that a vulcanized rubber whose volume resistivity under compression is not smaller than a predetermined value is used in an outermost layer of a radiator hose. More specifically vulcanized rubber of the present invention has volume resistivity under compression by 30% of not lower than $10^5 \Omega \cdot cm$ and preferably not lower than $10^6 \Omega \cdot cm$. When this volume resistivity is too small, anticorrosion effect of a radiator hose which contains the vulcanized rubber in its outermost layer, is not expressed sufficiently. Here, "volume resistivity under compression by 30%" refers to the volume resistivity of the vulcanized rubber when its length is compressed by 30% of the original length thereof in one direction . The method of measuring it will be explained in Examples described later. The compression in the present invention is not limited, but may be increased from 30% to 50%.

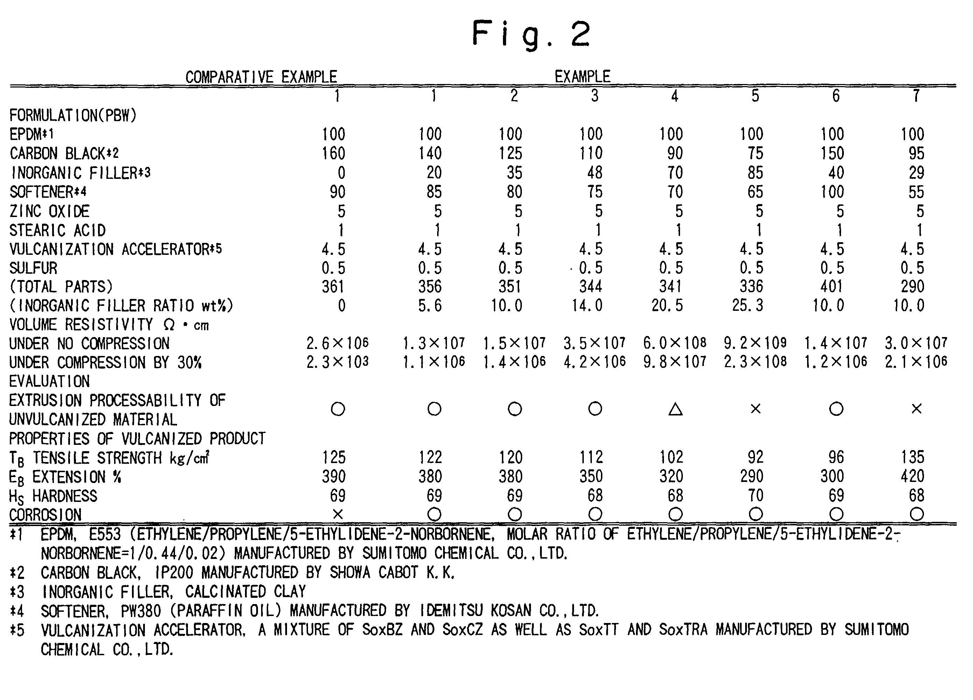

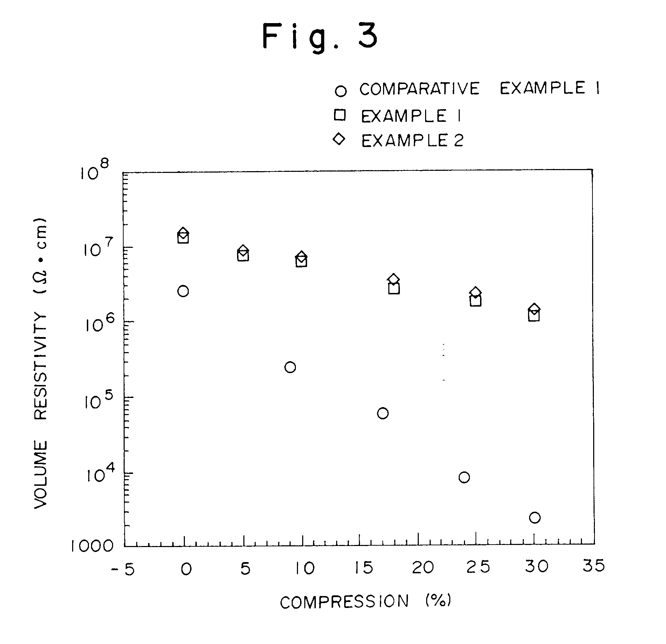

The vulcanized rubber including carbon black has a general tendency of decreasing of its volume resistivity under compression condition, although a quantitative relationship between a volume resistivity and compression is not well known. In fact, the present inventors found in Comparative example 1 that the volume resistivity decreased from $10^6 \Omega \cdot cm$ down to $10^3 \Omega \cdot cm$ under compression by 30% (See Table in Fig. 2, and Fig. 3). The data show that 30% compression condition decreases the volume resistivity to about 1/1000 times the value in the uncompressed condition. Accordingly, the corrosion of the metal clamp in contact with the radiator hose, which depends on the volume resistivity of the radiator hose, cannot be prevented from occurring when the volume resistivity of the radiator hose under no compression is simply defined. This is because, while the radiator hose supported by the clamp is compressed by about 30%, the volume resistivity of the radiator hose under no compression greatly differs from that under compression as described above, and the volume resistivity under compression influences the corrosion. The present invention has been accomplished on the basis of these findings by the inventors.

On the contrary, a vulcanized rubber of the present invention shows significantly small decrease of a volume resistivity under compression condition. As shown in Table in Fig. 2 and Fig. 3, even under compression by about 30% the volume resistivity decreases only 1/10 even under compression by about 30%. Accordingly, a volume resistivity of a radiator hose containing, in an outermost layer thereof, a vulcanized rubber of the present invention is not lower than $10^5 \Omega \cdot cm$, more preferably not lower than $10^6 \Omega \cdot cm$.

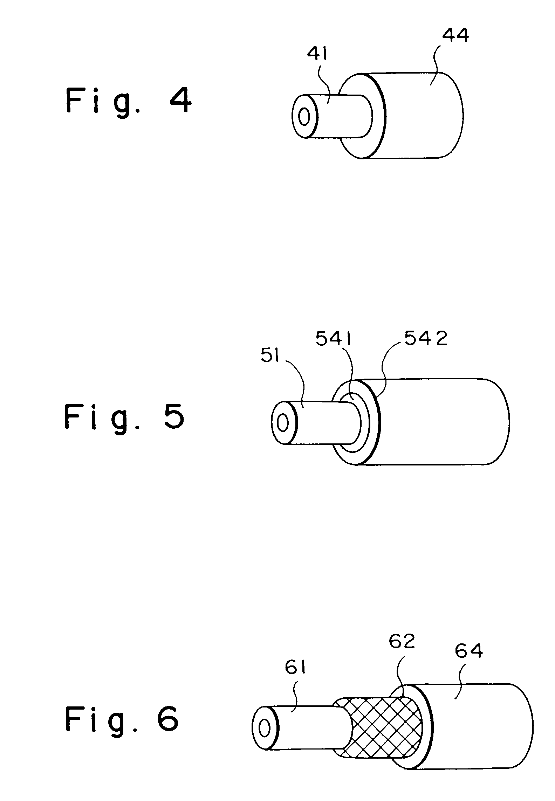

A radiator hose in the present invention may have a multiple configuration comprising, successively from the inside (center portion) of the hose, an inner rubber layer, an intermediate rubber layer, an intermediate reinforcement layer, and an outer rubber layer. Fig. 4 shows a simplified radiator hose which includes an inner layer 41 and an outer layer (outermost layer in this configuration) 44. Fig. 5 shows a modification example of the radiator hose shown in Fig. 4, which has more than two outer layers 541 and 542 as an example of multiple outer layer structure, instead. In this example an outermost layer described in the present invention is 542, which may contact with a metal tightening device such as metal clamp. The multiple outer layer structure shown in the modification example is also possible in all radiator hose structures described below in detail.

Another type of radiator hose suitable in the present invention is shown in Fig. 6 indicating an example of a radiator hose which comprises an additional intermediate reinforced layer 62. The intermediate layer is normally used for increasing mechanical strength of the hose, and may be made, for example, of polyester.

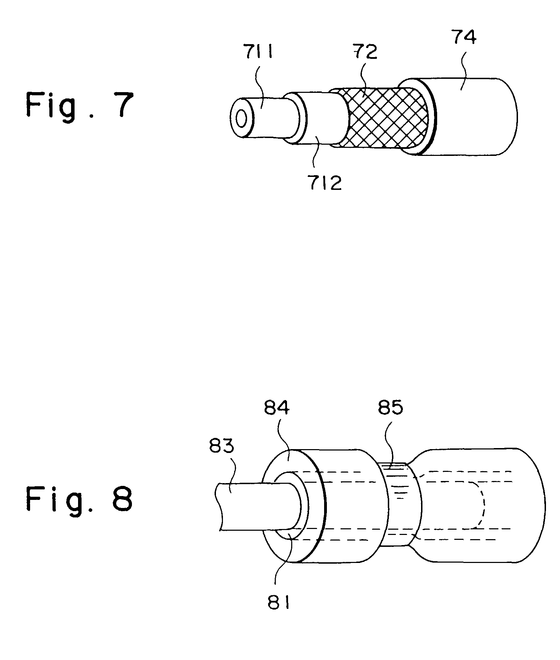

Fig. 7 shows an modification of the hose shown in Fig. 6 which comprises two inner rubber layers 711 and 712 as an example of a multiple inner layer structure. In the example the innermost layer 711 and outer layer (outermost layer in the example) 74 may contact with a metal tube and metal tightening device ,respectively. The multiple inner layer structure is also possible in all radiator hose described above and below.

A radiator hose described above may generally be used with a metal tube such as iron or aluminum for a radiator fluid outlet-inlet tube and a metal tightening device such as metal clamp. Fig. 8 shows a typical example of a radiator hose in the present invention. The metal radiator tube 83 is inserted into the hose which comprises an inner rubber layer 81 and an outer rubber layer 84, and a metal clamp 85 tightens the hose with a compression of the outer rubber layer 84. Under the compression condition the inner rubber layer 81 may also be compressed with a contact with the metal tube surface.

Accordingly in the present invention, an outermost rubber layer may contact with a metal material such as metal tube or metal tightening device under compression condition. Both rubber layers may use the above-mentioned vulcanized rubber related to the present invention. Therefore the present invention should not be restricted to the specific hose structure such as multiple layer configuration mentioned above, but may be applicable to other various type of radiator hose for various type of utilities.

Examples

Examples 1 to 7 and Comparative Example 1

Each of the formulations shown in Table in Fig. 2 was mixed by means of banbury and roll, thereby yielding a vulcanizable rubber composition (unvulcanized material). Then, this rubber composition was subjected to press vulcanization at a temperature of 150°C for 20 minutes, whereby a vulcanized rubber was obtained. This vulcanized rubber was measured and evaluated as follows.

(1) Volume Resistivity

(i) Volume resistivity under no compression was measured based on the method JIS-K6911.

(ii) Volume resistivity under compression was measured by the method described below.

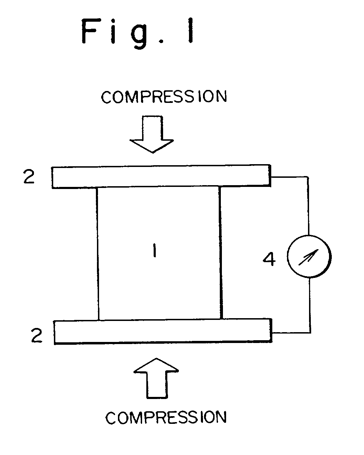

As shown in Fig. 1, a sample of the vulcanized rubber (having a cylindrical form of diameter 29.0 mm × height 12.7 mm) 1 was held between two sheets of copper plates (each with length 40 mm × width 70 mm × thickness 1.5 mm) 2 and compressed by up to about 30% in the height direction, and its resistance value ($R_2$) under certain compression was measured by a resistivity meter 4. Also, its resistance value ($R_1$) under no compression was similarly measured, and the volume resistivity under compression was obtained according to the following expression:

$$\text{volume resistivity under compression} = (\text{volume resistivity under no compression}) \times (R_2/R_1)$$

The compression dependence of a volume resistivity measured for Comparative Example 1 and Example 1 and 2 are summarized in the Table in Fig. 2. The data in the Table in Fig. 2 were plotted in Fig. 3.

(2) Extrusion Processability of Unvulcanized Material

An extruded sample was prepared by means of a Garvey die on the basis of ASTM D2230-77, and the sharpness of edges of this extruded sample and the smoothness of its surface texture were evaluated together. The sample with a sharp edge and a smooth surface texture was indicated by "O", the sample with a rough edge and a rough surface texture was indicated by "x", and the sample in-between was indicated by "Δ".

(3) Properties of Vulcanized Product were measured on the basis of JIS-K6301(Physical Testing Methods for Vulcanized Rubber, 1975) in general. The hardness was measured by a type A spring type Hardness Test in JIS-K6301.

(4) For Corrosion test, a radiator hose was prepared as follows: An outermost layer was formed by an extruder for an outer layer using unvulcanized rubber compounds, and an inner layer rubber was also formed by an extruder for an inner layer using same unvulcanized rubber compounds as the outer layer, respectively. A radiator hose was made by above two layers together with using an reinforced intermediate layer containing polyester fiber between the two layers. The dimension of thus obtained radiator hose were as followed:

Outer layer; diameter 42mm, thickness 2mm,
Inner layer; diameter 37mm, thickness 2mm,
Reinforced intermediate layer; diameter 38mm, thickness 0.5mm.

Thus prepared radiator hose was used for the corrosion test described below.

The radiator hose and an iron clamp (width 15mm, screw type) were brought into contact with each other under compression by 30%, and repeatedly subjected to processings of salt-water spraying, hot-air drying, and exposure to wet-atmosphere, and the state of corrosion of the iron clamp thereafter was evaluated. The sample with no corrosion was indicated by "O", whereas the sample with corrosion was indicated by "x".

The basic Japanese Application is No. 176175/1995 filed on July 12, 1995.

## Claims

1. A radiator hose which comprises, in an outermost layer thereof, a vulcanized rubber comprising an ethylene/α-olefin/nonconjugated diene copolymer rubber and having a volume resistivity under 30% compression of not lower than $10^5\Omega.cm$, wherein the vulcanized rubber is obtainable by vulcanization of a rubber composition comprising the following components (A) to (C):

   (A) an ethylene/α-olefin/nonconjugated diene copolymer rubber;
   (B) an additive other than the following component (C); and
   (C) an inorganic filler selected from clay, talc, silica, calcium carbonate, calcium silicate, magnesium carbonate, magnesium hydroxide, magnesium oxide, aluminum hydroxide, aluminum oxide, wollastonite and zeolite;

   wherein the total content of (A) to (C) is 300 to 400 parts by weight per 100 parts by weight of (A), and the proportion of (C) in the total amount of (A) to (C) is 5 to 20% by weight.

2. A radiator hose according to claim 1, wherein the volume resistivity of the vulcanized rubber under 30% compression is not lower than $10^6\Omega.cm$.

3. A radiator hose according to claim 1 or 2, wherein (B) comprises carbon black, a softener, zinc oxide, stearic acid, a vulcanization accelerator, and sulfur.

4. A radiator hose according to any one of the preceding claims, wherein the vulcanized rubber comprises 50 to 170 parts by weight of carbon black per 100 parts by weight of (A).

5. A radiator hose according to any one of the preceding claims, wherein the vulcanized rubber comprises 100 to 170 parts by weight of carbon black per 100 parts by weight of (A).

6. A radiator hose according to any one of the preceding claims, wherein the vulcanized rubber comprises 100 to 150 parts by weight of carbon black per 100 parts by weight of (A).

7.  A radiator hose according to any one of the preceding claims, wherein (C) is clay.

8.  A radiator hose according to any one of the preceding claims, wherein the vulcanized rubber has a hardness of 66 to 74 as measured by a type A spring type Hardness Test in JIS-K6301.

9.  A vulcanized rubber as defined in any one of the preceding claims, comprising an ethylene/α-olefin/nonconjugated diene copolymer rubber and having a volume resistivity under 30% compression of not lower than $10^5\Omega\cdot cm$.

**Patentansprüche**

1.  Kühlerschlauch, umfassend in seiner äußersten Schicht einen vulkanisierten Kautschuk, der einen Copolymerkautschuk aus Ethylen, α-Olefin und nicht konjugiertem Dien umfasst und einen spezifischen Volumenwiderstand bei 30% Kompression von wenigstens $10^5\Omega\cdot cm$ besitzt, wobei der vulkanisierte Kautschuk durch Vulkanisation einer Kautschukmasse erhältlich ist, die die folgenden Bestandteile (A) bis (C) umfasst:

    (A) einen Copolymerkautschuk aus Ethylen, α-Olefin und nicht konjugiertem Dien;
    (B) einen anderen Zusatzstoff als den folgenden Bestandteil (C); und
    (C) einen anorganischen Füllstoff, ausgewählt aus Tonerde, Talkum, Siliciumdioxid, Calciumcarbonat, Calciumsilikat, Magnesiumcarbonat, Magnesiumhydroxid, Magnesiumoxid, Aluminiumhydroxid, Aluminiumoxid, Wollastonit und Zeolith;

    wobei der Gesamtgehalt an (A) bis (C) 300 bis 400 Gewichtsteile je 100 Gewichtsteile (A) beträgt und der Anteil von (C) in der Gesamtmenge von (A) bis (C) 5 bis 20 Gew.-% beträgt.

2.  Kühlerschlauch nach Anspruch 1, wobei der spezifische Volumenwiderstand des vulkanisierten Kautschuks bei 30% Kompression wenigstens $10^6\ \Omega\cdot cm$ beträgt.

3.  Kühlerschlauch nach Anspruch 1 oder 2, wobei (B) Ruß, einen Weichmacher, Zinkoxid, Stearinsäure, einen Vulkanisierbeschleuniger und Schwefel umfasst.

4.  Kühlerschlauch nach einem der vorstehenden Ansprüche, wobei der vulkanisierte Kautschuk 50 bis 170 Gewichtsteile Ruß je 100 Gewichtsteile (A) umfasst.

5.  Kühlerschlauch nach einem der vorstehenden Ansprüche, wobei der vulkanisierte Kautschuk 100 bis 170 Gewichtsteile Ruß je 100 Gewichtsteile (A) umfasst.

6.  Kühlerschlauch nach einem der vorstehenden Ansprüche, wobei der vulkanisierte Kautschuk 100 bis 150 Gewichtsteile Ruß je 100 Gewichtsteile (A) umfasst.

7.  Kühlerschlauch nach einem der vorstehenden Ansprüche, wobei (C) Tonerde ist.

8.  Kühlerschlauch nach einem der vorstehenden Ansprüche, wobei der vulkanisierte Kautschuk eine Härte von 66 bis 74 besitzt, gemessen in einem Härtetest vom Federtyp Typ A (JIS-K6301).

9.  Vulkanisierter Kautschuk nach einem der vorstehenden Ansprüche, der einen Copolymerkautschuk aus Ethylen, α-Olefin und nicht konjugiertem Dien umfasst und einen spezifischen Volumenwiderstand bei 30% Kompression von wenigstens $10^5\Omega\cdot cm$ besitzt.

**Revendications**

1.  Tuyau de radiateur qui comprend, dans une couche extérieure de celui-ci, un caoutchouc vulcanisé comprenant un caoutchouc de copolymère d'éthylène/oléfine-α/diène non conjugué et présentant une résistivité volumique sous une compression de 30% d'au moins $10^5\Omega.cm$, dans lequel le caoutchouc vulcanisé peut être obtenu par vulcanisation d'une composition de caoutchouc comprenant les constituants (A) à (C) suivants :

    (A) un caoutchouc de copolymère d'éthylène/oléfine-α/diène non conjugué;
    (B) un additif différent du constituant (C) suivant; et
    (C) une charge inorganique choisie parmi l'argile, la stéatite, la silice, le carbonate de calcium, le silicate de calcium, le carbonate de magnésium, l'hydroxyde de magnésium, l'oxyde de magnésium, l'hydroxyde d'aluminium, l'oxyde d'aluminium, la wollastonite et la zéolite;

    dans lequel la teneur totale de (A) à (C) est de 300 à 400 parties en poids pour 100 parties en poids de (A) et la proportion de (C) dans la quantité totale de (A) à (C) est de 5 à 20% en poids.

2.  Tuyau de radiateur selon la revendication 1, dans lequel la résistivité volumique du caoutchouc vulcanisé sous une compression de 30% est d'au moins $10^6$ Ω.cm.

3.  Tuyau de radiateur selon la revendication 1 ou 2, dans lequel (B) comprend du noir de carbone, un plastifiant, de l'oxyde de zinc, de l'acide stéarique, un accélérateur de vulcanisation et du soufre.

4.  Tuyau de radiateur selon l'une quelconque des revendications précédentes, dans lequel le caoutchouc vulcanisé comprend de 50 à 170 parties en poids de noir de carbone pour 100 parties en poids de (A).

5.  Tuyau de radiateur selon l'une quelconque des revendications précédentes, dans lequel le caoutchouc vulcanisé comprend de 100 à 170 parties en poids de noir de carbone pour 100 parties en poids de (A).

6.  Tuyau de radiateur selon l'une quelconque des revendications précédentes, dans lequel le caoutchouc vulcanisé comprend de 100 à 150 parties en poids de noir de carbone pour 100 parties en poids de (A).

7.  Tuyau de radiateur selon l'une quelconque des revendications précédentes, dans lequel (C) est l'argile.

8.  Tuyau de radiateur selon l'une quelconque des revendications précédentes, dans lequel le caoutchouc vulcanisé présente une dureté de 66 à 74 mesurée par un test de dureté de type ressort de type A dans JIS-K6301.

9.  Caoutchouc vulcanisé selon l'une quelconque des revendications précédentes comprenant un caoutchouc de copolymère d'éthylène/oléfine-α/diène non conjugué et présentant une résistivité volumique sous une compression de 30% d'au moins $10^5$Ω.cm.

# Fig. I

COMPRESSION

2

I

4

2

COMPRESSION

# Fig. 2

| FORMULATION(PBW) | COMPARATIVE EXAMPLE 1 | EXAMPLE 1 | 2 | 3 | 4 | 5 | 6 | 7 |
|---|---|---|---|---|---|---|---|---|
| EPDM*1 | 100 | 100 | 100 | 100 | 100 | 100 | 100 | 100 |
| CARBON BLACK*2 | 160 | 140 | 125 | 110 | 90 | 75 | 150 | 95 |
| INORGANIC FILLER*3 | 0 | 20 | 35 | 48 | 70 | 85 | 40 | 29 |
| SOFTENER*4 | 90 | 85 | 80 | 75 | 70 | 65 | 100 | 55 |
| ZINC OXIDE | 5 | 5 | 5 | 5 | 5 | 5 | 5 | 5 |
| STEARIC ACID | 1 | 1 | 1 | 1 | 1 | 1 | 1 | 1 |
| VULCANIZATION ACCELERATOR*5 | 4.5 | 4.5 | 4.5 | 4.5 | 4.5 | 4.5 | 4.5 | 4.5 |
| SULFUR | 0.5 | 0.5 | 0.5 | ·0.5 | 0.5 | 0.5 | 0.5 | 0.5 |
| (TOTAL PARTS) | 361 | 356 | 351 | 344 | 341 | 336 | 401 | 290 |
| (INORGANIC FILLER RATIO wt%) | 0 | 5.6 | 10.0 | 14.0 | 20.5 | 25.3 | 10.0 | 10.0 |
| VOLUME RESISTIVITY Ω·cm | | | | | | | | |
| UNDER NO COMPRESSION | $2.6 \times 10^6$ | $1.3 \times 10^7$ | $1.5 \times 10^7$ | $3.5 \times 10^7$ | $6.0 \times 10^8$ | $9.2 \times 10^9$ | $1.4 \times 10^7$ | $3.0 \times 10^7$ |
| UNDER COMPRESSION BY 30% | $2.3 \times 10^3$ | $1.1 \times 10^6$ | $1.4 \times 10^6$ | $4.2 \times 10^6$ | $9.8 \times 10^7$ | $2.3 \times 10^8$ | $1.2 \times 10^6$ | $2.1 \times 10^6$ |
| EVALUATION | | | | | | | | |
| EXTRUSION PROCESSABILITY OF UNVULCANIZED MATERIAL | ○ | ○ | ○ | ○ | △ | × | ○ | × |
| PROPERTIES OF VULCANIZED PRODUCT | | | | | | | | |
| $T_B$ TENSILE STRENGTH kg/cm² | 125 | 122 | 120 | 112 | 102 | 92 | 96 | 135 |
| $E_B$ EXTENSION % | 390 | 380 | 380 | 350 | 320 | 290 | 300 | 420 |
| $H_S$ HARDNESS | 69 | 69 | 69 | 68 | 68 | 70 | 69 | 68 |
| CORROSION | × | ○ | ○ | ○ | ○ | ○ | ○ | ○ |

*1 EPDM, E553 (ETHYLENE/PROPYLENE/5-ETHYLIDENE-2-NORBORNENE, MOLAR RATIO OF ETHYLENE/PROPYLENE/5-ETHYLIDENE-2-NORBORNENE=1/0.44/0.02) MANUFACTURED BY SUMITOMO CHEMICAL CO.,LTD.

*2 CARBON BLACK, IP200 MANUFACTURED BY SHOWA CABOT K.K.

*3 INORGANIC FILLER, CALCINATED CLAY

*4 SOFTENER, PW380 (PARAFFIN OIL) MANUFACTURED BY IDEMITSU KOSAN CO.,LTD.

*5 VULCANIZATION ACCELERATOR, A MIXTURE OF SoxBZ AND SoxCZ AS WELL AS SoxTT AND SoxTRA MANUFACTURED BY SUMITOMO CHEMICAL CO.,LTD.

EP 0 761 753 B1

# Fig. 3

○ COMPARATIVE EXAMPLE I
□ EXAMPLE I
◇ EXAMPLE 2

EP 0 761 753 B1

Fig. 4

41    44

Fig. 5

51    541    542

Fig. 6

61    62    64

11

Fig. 7

711    72    74

712

Fig. 8

83    84    85

81